# EUROPEAN PATENT APPLICATION

(11) **EP 4 506 281 A1**
(43) Date of publication of application: **12.02.2025**
(21) Application number: 23784841.1
(22) Date of filing: 02.02.2023
(51) Int. Cl.: B65G 19/20, B65G 19/10, B01D 21/06, B01D 21/18

(54) **NON-METALLIC CONVEYOR CHAIN HAVING IMPROVED DURABILITY, AND SLUDGE REMOVAL FACILITY INCLUDING SAME**

(30) Priority: 05.04.2022 KR 20220042295
(71) Applicant: Linkon Technology Co., Ltd., Seongnam-si, Gyeonggi-do 13207 (KR); Oh, Jeong Hun, Seongnam-si, Gyeonggi-do 13504 (KR)
(72) Inventor: OH, Jeong Hun, Seongnam-si, Gyeonggi-do 13504 (KR)
(74) Representative: IPAZ
(86) International application number: PCT/KR2023/001495
(87) International publication number: WO 2023/195613

(57) **Abstract**

The purpose of the present invention is to improve a chain link structure of a non-metallic conveyor chain and increase shear strength of the chain used in a sludge removal facility, thereby improving durability of the non-metallic conveyor chain. To this end, the present invention provides a non-metallic conveyor chain having improved durability as a conveyor chain for a sludge collector, the conveyor chain including a plurality of unit chains and chain pins with which the unit chains are linked to each other, wherein each of the unit chains is provided at one side thereof with a barrel and at the other side thereof with a yoke, the barrel of the unit chain is formed on an outer surface thereof with a chain pocket having a groove structure, and the yoke of the unit chain is formed on an inner surface thereof with a chain boss protruding so as to correspond to the chain pocket of the unit chain to which the chain boss is to be linked.

## Description

### [Technical Field]

The present invention relates to a non-metallic conveyor chain and a sludge removal facility including the same, and more particularly to a technique for improving durability of a non-metallic conveyor chain applied to a sludge removal facility through improvement of a chain link structure of the non-metallic conveyor chain.

### [Background Art]

Various organic and inorganic substances are present in raw water introduced into sewage treatment plants and wastewater treatment plants and are introduced together with various floating solids into the treatment plants to be subjected to a sewage treatment process.

In a typical sewage treatment process, sand and floating solids contained in incoming sewage are removed in an inflow basin and are then sequentially subjected to gravity sedimentation in a primary sedimentation basin, biological decomposition in biological reactors where organic substances are decomposed by microorganisms, and re-sedimentation of supernatant water, which has passed through the biological reactors, in a secondary sedimentation basin to remove the floating solids. Then, the supernatant water is sent to a final total phosphorus treatment facility for further clarification and is finally discharged after sterilization.

Among such treatment processes, a first sedimentation basin corresponding to the primary sedimentation basin and a second sedimentation basin corresponding to a final sedimentation basin are provided with scum skimmers for removal of scum together with sludge collectors for removal of settled sludge.

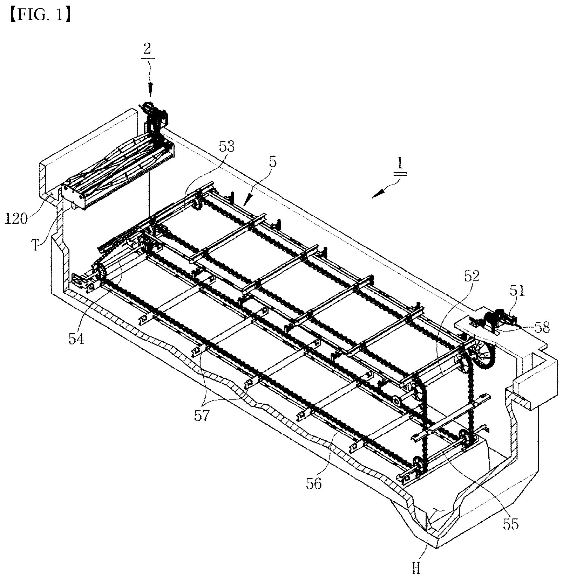

Referring to FIG. 1, a sedimentation basin 1 is generally provided with a sludge collector 5 that scrapes sludge on the bottom and sends the sludge to a hopper H for sludge discharge, and a scum skimmer device 2 that skims floating materials, such as scum and plastic materials, on the sewage and discharges the floating materials through a trough T.

In addition, a supernatant water discharge channel 120 is disposed at the rear of an installation region of the scum skimmer device 2 to discharge supernatant water, which has passed through the scum skimmer device 2, to the outside of the sedimentation basin 1.

Here, the sludge collector 5 includes a collector drive motor 51, a head shaft 52 disposed to rotate in response to transmission of drive force upon driving of the collector drive motor 51, and an idle shaft 53, a take-up shaft 54, and a corner shaft 55 sequentially arranged to rotate in association with rotation of the head shaft 52, a main chain 56 wound around these shafts to transmit rotational force to the idle shaft 53, the take-up shaft 54, and the corner shaft 55 upon rotation of the head shaft 52, and a plurality of flights 57 arranged on the main chain 56 in a longitudinal direction thereof.

In operation of the sludge collector 5, when drive force of the collector drive motor 51 is transmitted to the head shaft 52 through the chain for driving the head shaft wound around a sprocket coupled to an axis of the head shaft 52 to rotate the head shaft 52, the main chain 56 wound around the head shaft 52, the idle shaft 53, the take-up shaft 54, and the corner shaft 55 rotates these shafts while moving along a predetermined track.

When the main chain 56 rotates in this manner, the flights 57 arranged at certain intervals on the main chain 56 scrape sludge from the bottom of the sedimentation basin 1 while pushing scum and floating solids toward the skimmer on the water surface. Then, the sludge scraped by the flights 57 from the bottom of the sedimentation basin 1 falls into the hopper H and is then discharged while the scum and floating solids pushed by the flight 57 toward a side of the scum skimmers on the water surface are sent to the trough disposed on a beach plate by removal action through rotation of scum skimmers of the scum skimmer device 2 and are then discharged.

Then, after passing through the scum skimmer device 2, the supernatant water is discharged outside the sedimentation basin 1 through a weir 120, which constitutes a drain path.

That is, the sludge collector is composed of two rows of chains wound in the form of endless tracks disposed in a longitudinal direction of the sedimentation basin, with the flights attached to the chains to be arranged at regular intervals in a width direction of the sedimentation basin, and when the chains provided in the form of endless tracks are driven by a sprocket through transmission of power, the sludge settled on the bottom through gravity sedimentation by the flights attached to the chains at regular intervals is transferred to the hopper.

A so-called chain-flight type sludge collector, in which sludge is transferred by flights attached to chains, is provided with conveyor chains as a means for moving the flights.

Since the dimension of the sedimentation basin is not standardized for each sedimentation capacity, the sedimentation basin varies in width from 16 m to 2 m and in length from 15 m to 120 m. As a result, the flights vary in height from 150 mm to 360 mm and have various lengths matching the width of the sedimentation basin.

In addition, conveyor chains made of cast iron or stainless steel have generally been used in the past. However, considering the total length of the chains depending on the sedimentation capacity, excessive power is required to drive the chains and maintenance of the conveyor chains is inconvenient due to high load (e.g., 19 tons) when the entire chains are formed of metal. Thus, in recent years, non-metallic conveyor chains made of composite materials or high-strength engineering plastics are being applied in order to solve these problems.

On the other hand, a two-row chain-flight type sludge collector provided with two rows of chains is most commonly used in small sedimentation basins. In this type of sludge collector, the flights are assembled to the two rows of chains spaced apart from each other so as to collect sludge while moving together with the chains.

As such, although small sedimentation basins do not suffer significant problems in operation of the chain-flight type, large sedimentation basins having widths ranging from 7 m to 15 m and lengths ranging from 20 m to 120 m can be subject to frequent destruction due to frequent fracture of the chains and sagging of the flights in operation of the chain-flight type. Accordingly, various attempts have been made to solve such problems.

For example, as an attempt to prevent destruction due to sagging of the flights, Korean Patent No. 10-2169694 (entitled: Chain-flight type sludge collector with reinforced flights) of the applicant discloses a technique for solving this problem through reinforcement of the flights.

In other words, Korean Patent No. 10-2169694 discloses a technique capable of effectively preventing the flights from bending, deforming, or breaking depending upon the sagging amount at the center of the flight due to load of sludge while the flight moves while collecting the sludge.

On the other hand, among main components of the sludge collector 5, that is, the drive unit, the sprocket, the conveyor chains, and the flights, the conveyor chains require high strength and durability according to specifications of the sedimentation basin, and, considering maintenance and assembly of the chains, yokes and barrels are generally moved and assembled in a horizontal direction when connecting chain links.

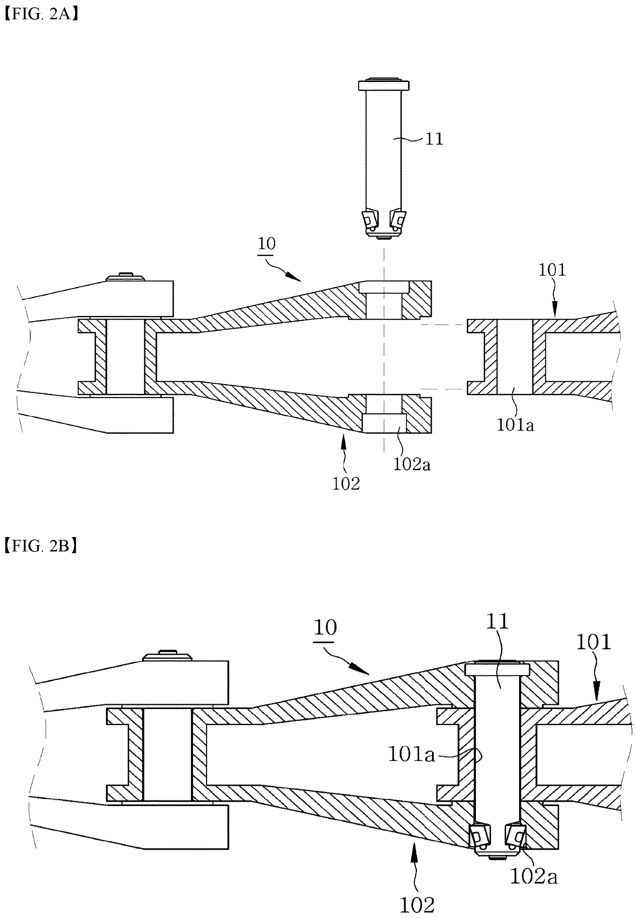

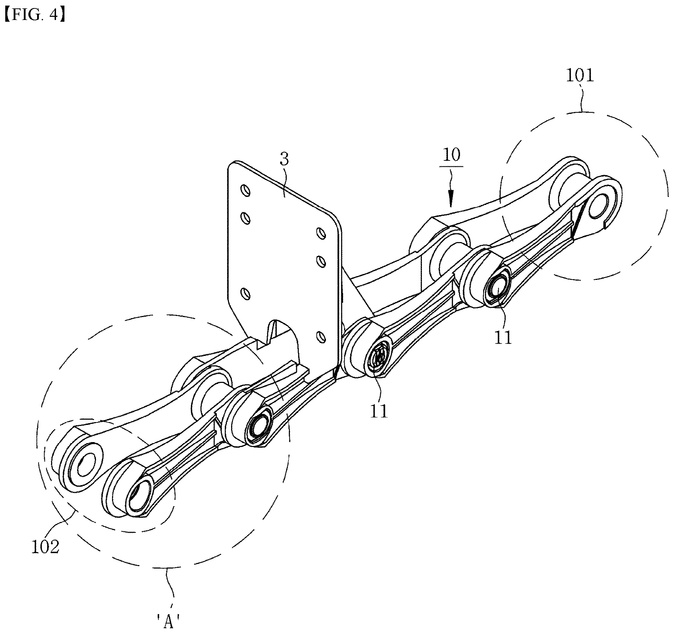

In other words, as shown in FIG. 2A and FIG. 2B, a typical conveyor chain includes yokes, barrels, and chain pins. In addition, the conveyor chain composed of unit chains linked together is provided with attachments (see FIG. 4) for installing flights at regular intervals.

In addition, when connecting the chain links, barrels 101 of one chain and yokes 102 of the other chain among two unit chains to be connected to each other are disposed to face each other (see FIG. 2A).

Then, the barrel 101 is placed inside the yoke 102 in a state shown in FIG. 2A, and a steel sleeve-integrated chain pin 11 is inserted into the yoke and the barrel to connect the two unit chains 10 (see FIG. 2B).

However, a conveyor chain having a typical chain link structure is disposed in the sedimentation basin and subjected to tensile force, and the tensile force applied to the chain acts as shear load on the chain pin 11, which does not have a structure capable of distributing the shear load concentrated thereon and thus bears the entire shear load.

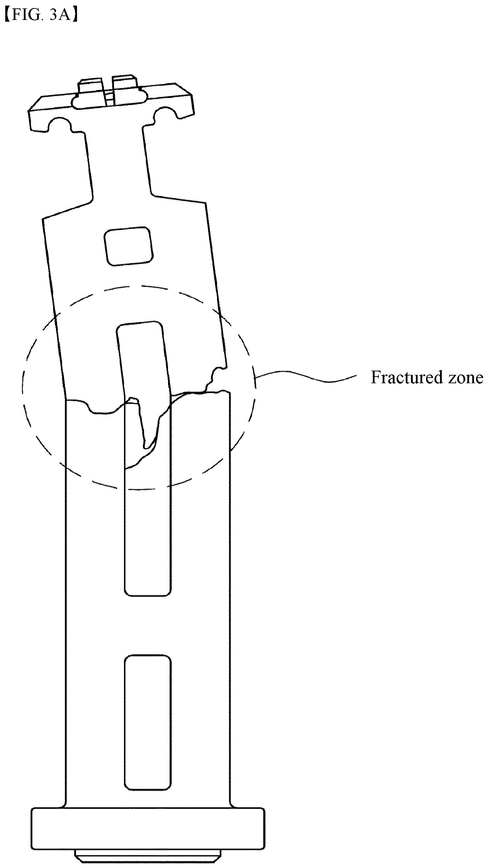

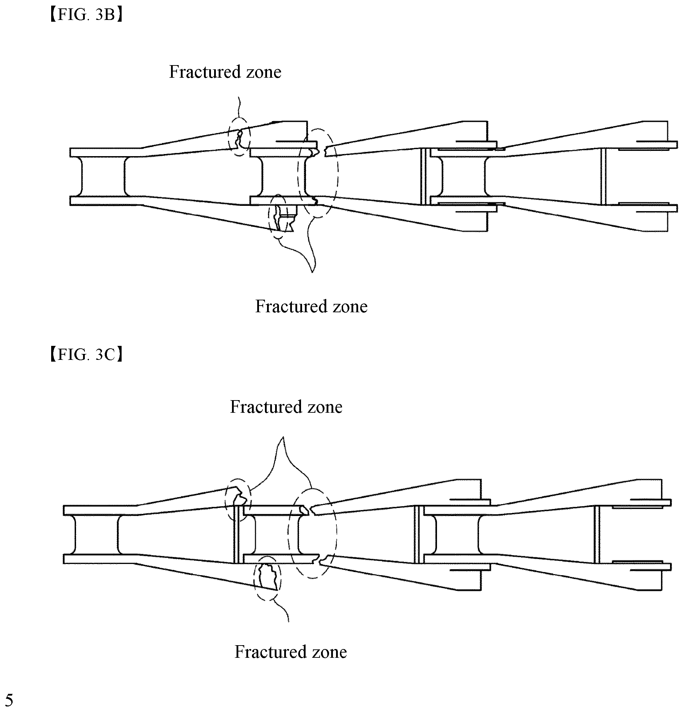

As a result, there is a problem in the related art that the chain pin can be fractured, as shown in FIG. 3A, or the yoke 102 or the barrel 101 close to the chain pin can be fractured due to concentration of stress thereon, as shown in FIG. 3B and FIG. 3C.

Since fracture of the chains or chain pins caused by the chain link structure of such a typical conveyor chain entails not only cost loss due to maintenance of the conveyor chain, but also social and economic loss due to treatment failure of the raw water in the sedimentation basin, there is a need for development of a technique capable of solving this problem.

### [Disclosure]

### [Technical Problem]

The present invention has been made to solve the aforementioned problems and it is an object of the present invention to improve durability of a non-metallic conveyor chain applied to a sludge removal facility by improving shear strength of the non-metallic conveyor chain through improvement of a chain link structure of the non-metallic conveyor chain.

In other words, the present invention aims at providing a non-metallic conveyor chain with durability improved through increase in shear resistance thereof by allowing shear load borne by a chain pin due to tensile load applied to the chain in a sedimentation basin to be distributed to a barrel and a yoke of the chain surrounding the chain pin, and a sludge removal facility including the same.

### [Technical Solution]

In accordance with one aspect of the present invention, there is provided a non-metallic conveyor chain with improved durability for a sludge collector, the non-metallic conveyor chain including a plurality of unit chains and chain pins by which the unit chains are linked to each other, wherein each of the unit chains is provided at one side thereof with a barrel and at the other side thereof with a yoke, the barrel of the unit chain is formed on an outer surface thereof with a chain pocket having a groove structure, and the yoke of the unit chain is formed on an inner surface thereof with a chain boss protruding so as to correspond to the chain pocket of the unit chain to which the chain boss is to be linked.

The chain pocket may include a save rim spaced apart from a pinhole of the barrel and formed in a predetermined region along a circumference of the pinhole, and an opening acting as a passage through which the chain boss is inserted into the chain pocket to be placed therein.

An inlet width of the opening may be greater than or equal to an outer diameter of the chain boss.

The chain pocket may further include a guide having a plane guiding movement of the chain boss inserted into the chain pocket through the opening from one side of an inlet of the opening to an inner surface of one side of the save rim, the guide constituting the chain pocket together with the save rim.

An inner surface of the chain pocket may be formed to have a gradient in a depth direction of the chain pocket such that the chain pocket has a diameter increasing with depth into the chain pocket.

In accordance with another aspect of the present invention, there is provided a non-metallic conveyor chain with improved durability for a sludge collector, the non-metallic conveyor chain including a plurality of unit chains and chain pins by which the unit chains are linked to each other, wherein each of the unit chains is provided at one side thereof with a barrel and at the other side thereof with a yoke, the barrel of the unit chain is formed on an outer surface thereof with a chain boss, and the yoke of the unit chain is formed on an inner surface thereof with a chain pocket recessed so as to correspond to the chain boss of the unit chain to which the chain pocket is to be linked.

A maximum width between chain bosses formed at opposite sides on the outer surface of the barrel may be greater than an inner width of the yoke into which the barrel is inserted.

A front region of the chain boss in an insertion direction of the barrel may be gradually lowered in a forward direction so as to facilitate insertion of the barrel into the yoke upon assembly of the barrel and the yoke.

The chain pin may include an SRP chain pin made of steel reinforced plastic (SRP).

In accordance with a further aspect of the present invention, there is provided a sludge removal facility including: a sedimentation basin into which raw water is introduced; and a sludge collector configured to scrape sludge from a bottom of the sedimentation basin and discharge the sludge from the sedimentation basin, wherein the sludge collector is provided with the non-metallic conveyor chain according to any one of claims 1 to 8 to send scum pushed through operation of flights constituting the sludge collector from a water surface of the sedimentation basin to a trough for discharge.

### [Advantageous Effects]

The present invention can improve durability of a non-metallic conveyor chain through increase in shear resistance thereof by allowing shear load borne by a chain pin due to tensile load applied to the chain in a sedimentation basin to be distributed to a barrel and a yoke of the chain surrounding the chain pin.

That is, according to the present invention, a chain pocket on an outer surface of the barrel engages with a chain boss on an inner surface of the yoke to reduce shear stress together with the chain pin, thereby improving lifespan of the non-metallic conveyor chain through improvement in durability of the non-metallic conveyor chain.

In addition, according to the present invention, by applying high-strength steel reinforced plastic (SRP) technology to chain pins constituting a chain link structure, in which each chain pin is inserted into a stainless steel pipe, it is possible to reduce maintenance costs and operation costs through substantial increase in durability and tensile strength of the conveyor chain compared to an existing chain link structure, and to reduce microplastic elution by protecting the conveyor chain from abrasion by sand and sludge.

As described above, the present invention improves durability and lifespan of the non-metallic conveyor chain through improvement of the chain link structure thereof, thereby not only reducing cost loss for replacement and maintenance due to chain fracture occurring in typical conveyor chains, but also contributing to economic improvement in operation of a sludge removal facility by preventing social and economic losses due to treatment failure of raw water in a sedimentation basin.

### [Description of Drawings]

FIG. 1 is a partially cut perspective view of an example of a sludge removal facility.
FIG. 2A and FIG. 2B are partially cut plan views illustrating a link assembly process of a typical conveyor chain,
FIG. 2A showing a state before assembly,
FIG. 2B showing a state after assembly.
FIG. 3A to FIG. 3C are reference views illustrating problems with a chain link structure of an existing non-metallic conveyor chain.
FIG. 4 is a perspective view of a link structure of a conveyor chain according to a first embodiment of the present invention.

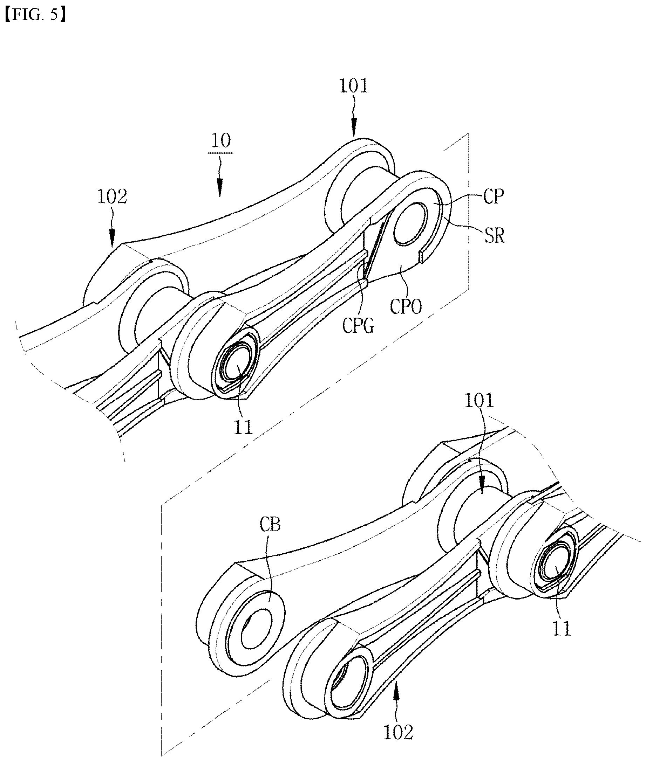

FIG. 5 is an exploded perspective view of Part A of FIG. 4.

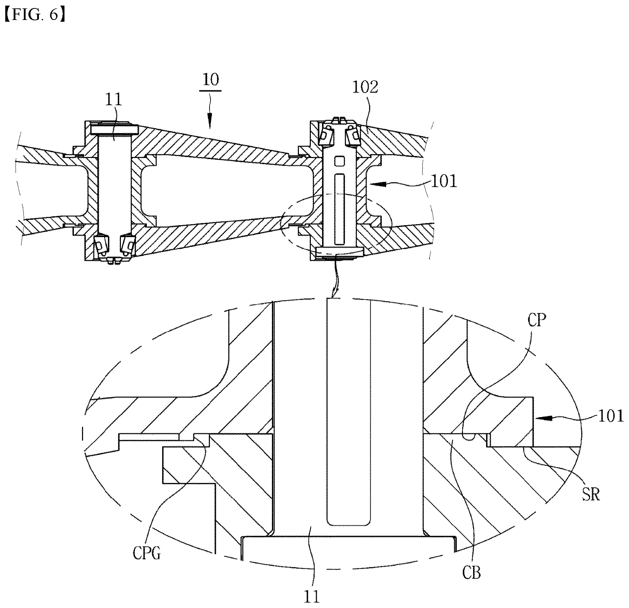

FIG. 6 is a cross-sectional view of Part 'A' of FIG. 4, showing a chain boss formed in the yoke and inserted into a chain pocket formed in a barrel of the conveyor chain.

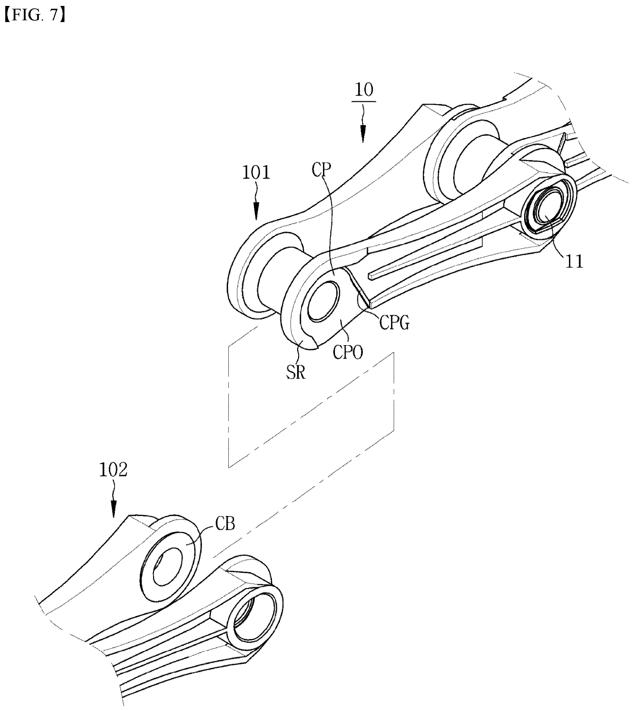

FIG. 7 is an exploded perspective view of a link structure of a conveyor chain according to a second embodiment of the present invention.

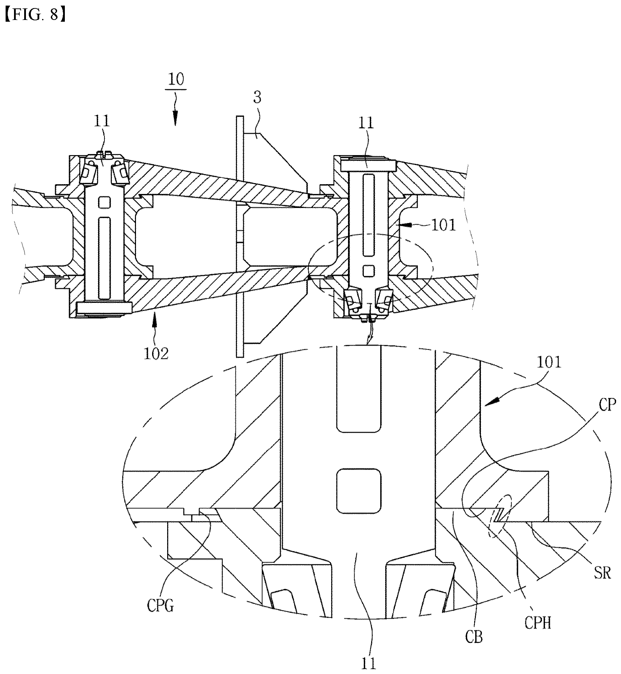

FIG. 8 is a cross-sectional view of the link structure of the conveyor chain according to the second embodiment of the present invention in relation to FIG. 7.

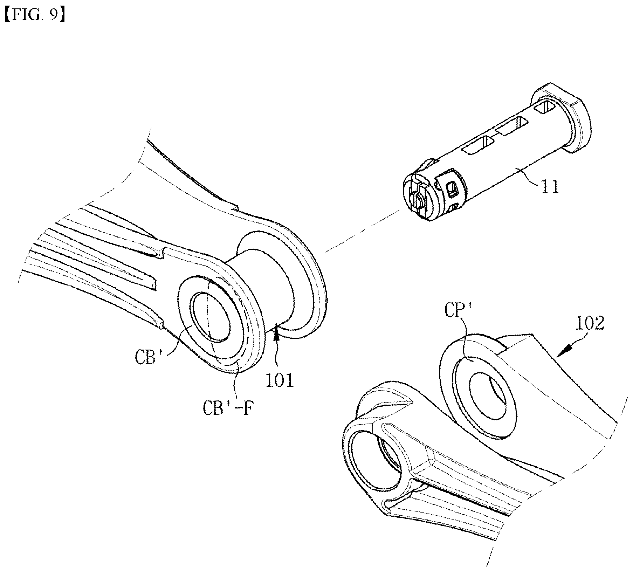

FIG. 9 is an exploded perspective view of a link structure of a conveyor chain according to a third embodiment of the present invention.

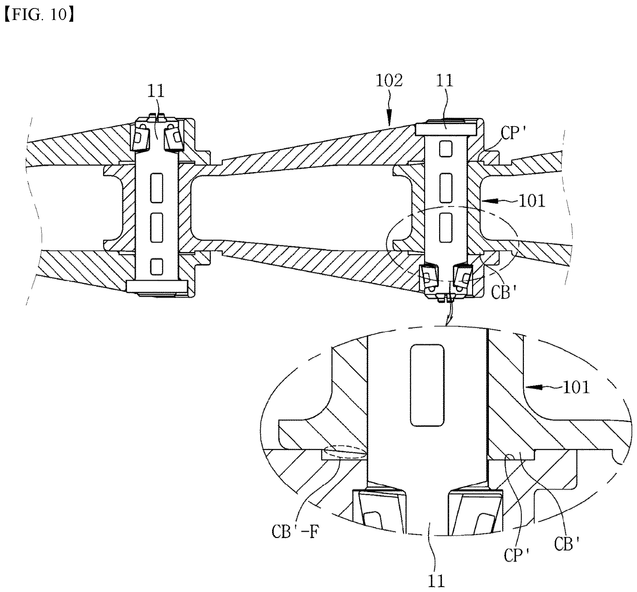

FIG. 10 is a cross-sectional view of the link structure of the conveyor chain according to the third embodiment of the present invention shown in FIG. 9.

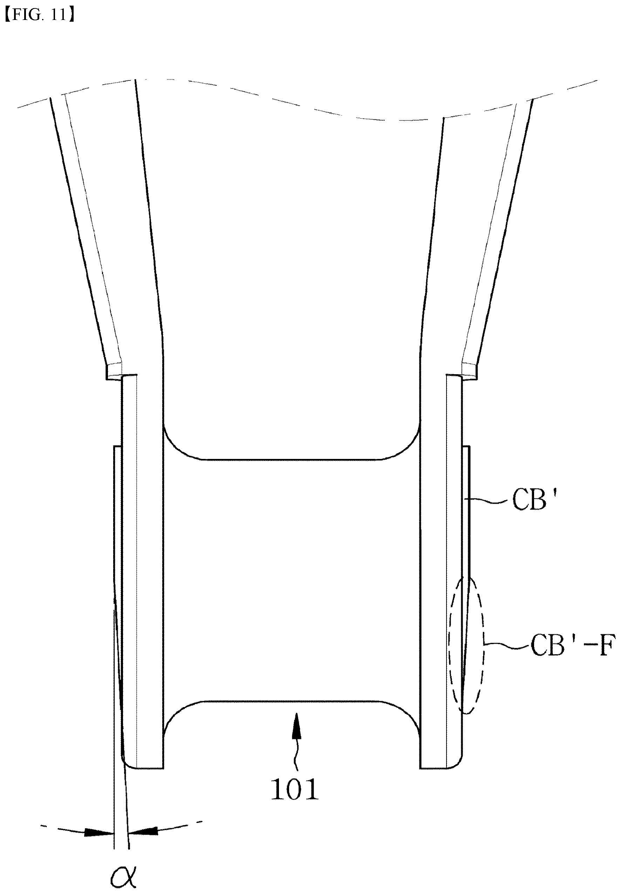

FIG. 11 is a plan view of a barrel shown in FIG. 9.

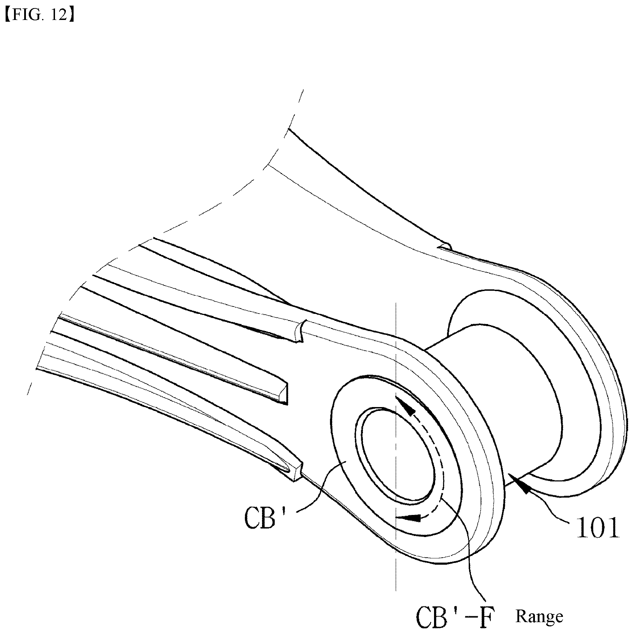

FIG. 12 is a view illustrating a guide slope range in a chain boss of the barrel shown in FIG. 9.

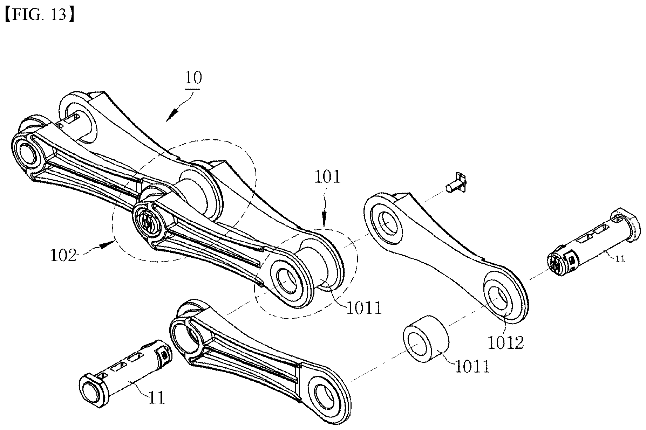

FIG. 13 is an exploded perspective view of a link structure of a conveyor chain according to a fourth embodiment of the present invention.

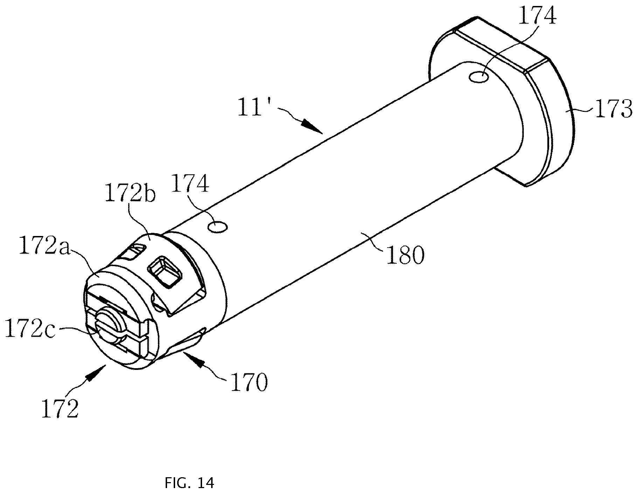

FIG. 14 is a perspective view of a chain pin made of steel reinforced plastic (SRP) as another embodiment of a chain pin according to the present invention.

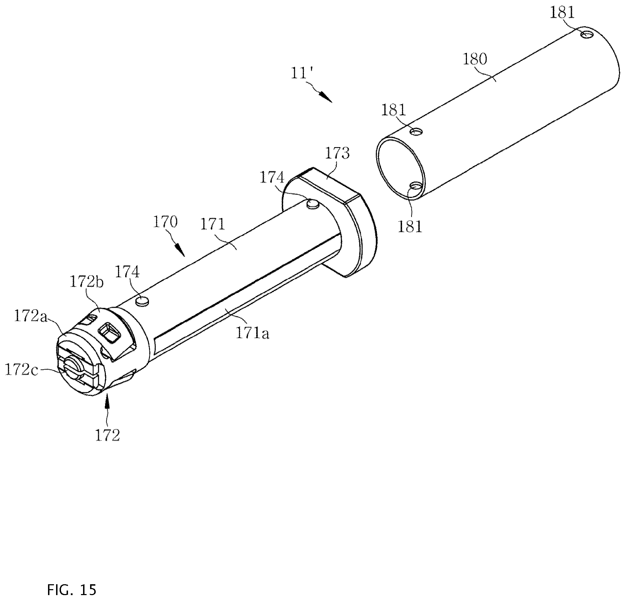

FIG. 15 is an exploded perspective view of FIG. 14.

### [Best Mode]

The objects, features, and advantages of the present invention will become apparent from detailed description of embodiments with reference to the accompanying drawings.

However, it should be understood that the present invention is not limited to the following embodiments and may be embodied in many different ways, and these embodiments are provided to make disclosure of the invention complete and to fully inform a person having ordinary knowledge in the art of the scope of the invention.

Accordingly, it should be understood that the embodiments described herein and configurations shown in the drawings are only the most preferred embodiments of the invention and do not represent all of the technical ideas of the invention, and that there may be various equivalents and modifications that can substitute for these embodiments at the filing time of the present invention.

### [Embodiment 1]

First, a first embodiment of the present invention will be described with reference to FIG. 4 to FIG. 6.

FIG. 4 is a perspective view of a link structure of a conveyor chain according to a first embodiment of the present invention, FIG. 5 is an exploded perspective view of Part A of FIG. 4, and FIG. 6 is a cross-sectional view of Part 'A' of FIG. 4, showing a chain boss formed on the yoke and inserted into a chain pocket formed on a barrel of the conveyor chain.

Hereinafter, referring to FIG. 4 to FIG. 6, the link structure of the conveyor chain according to the first embodiment of the present invention will be described.

According to the first embodiment, the conveyor chain for a sludge collector includes a plurality of unit chains 10 and chain pins 11 inserted into pinholes 101a, 102a to mediate linkage between the unit chains 10.

The unit chain 10 is provided at one side thereof with barrels 101 and at the other side thereof with yokes 102, in which each of the barrels 101 of the unit chain 10 is formed on an outer surface thereof with chain pockets CP having a groove structure and each of the yokes 102 of the unit chain 10 is formed on an inner surface thereof with chain bosses CB protruding so as to correspond to the chain pockets CP of the unit chain 10 to which the chain bosses are to be linked.

Here, each of the chain pockets CP includes a save rim SR spaced apart from a pinhole 101a of the barrel 101 and formed in a predetermined region along a circumference of the pinhole 101a, an opening CPO which acts as a passage through which the chain boss CB is inserted into the chain pocket CP to be placed therein, a guide CPG having a plane guiding movement of the chain boss CB inserted into the chain pocket CP through the opening CPO from one side of an inlet of the opening CPO to an inner surface of one side of the save rim SR.

That is, the guide CPG includes a vertical surface, thereby constituting the chain pocket CP together with the save rim SR and the opening CPO.

In addition, an inlet width of the opening CPO is greater than or equal to an outer diameter of the chain boss CB.

With this structure, the non-metallic conveyor chain according to the first embodiment of the present invention has the following effects.

In the link structure of the conveyor chain according to this embodiment, shear load applied to the chain in a sedimentation basin is borne by the chain pin 11 together with the barrel 101 and the yoke 102 surrounding the chain pin 11, thereby improving durability of the non-metallic conveyor chain through improvement in shear resistance of the non-metallic conveyor chain.

That is, in a typical conveyor chain link structure, tensile load applied to the chain in the sedimentation basin is borne solely by the chain pin 11 and causes fracture of the yoke 102, the barrel 101, or the chain pin 11, thereby providing unsatisfactory durability.

However, according to this embodiment, the shear load applied to the chain in the sedimentation basin is received by the barrel 101 and the yoke 102 of the chain surrounding the chain pin 11 together, thereby making it possible to improve durability of the conveyor chain through improvement in shear resistance of the non-metallic conveyor chain.

That is, according to the present invention, the chain pockets CP on the outer surface of the barrels 101 engage with the chain bosses CB on the inner surfaces of the yokes 102 to reduce shear stress together with the chain pins 11, thereby improving lifespan of the non-metallic conveyor chain and other facilities including the same through improvement in durability of the non-metallic conveyor chain.

### [Embodiment 2]

Next, referring to FIG. 7 and FIG. 8, a second embodiment of the present invention will be described.

FIG. 7 is an exploded perspective view of a link structure of a conveyor chain according to a second embodiment of the present invention and FIG. 8 is a cross-sectional view of the link structure of the conveyor chain according to the second embodiment of the present invention shown in FIG. 7.

Referring to FIG. 7 and FIG. 8, the basic structure of the conveyor chain according to the second embodiment is the same as the basic structure of the conveyor chain according to the first embodiment except that a gradient is formed on a matching surface of the chain pocket CP and the chain boss CB.

That is, the conveyor chain for a sludge collector according to this embodiment also includes a plurality of unit chains 10 and chain pins 11 inserted into pinholes 101a, 102a to mediate linkage between the unit chains 10

Here, the unit chain 10 is provided at one side thereof with barrels 101 and at the other side thereof with yokes 102, in which each of the barrels 101 of the unit chain 10 is formed on an outer surface thereof with chain pockets CP having a groove structure and each of the yokes 102 of the unit chain 10 is formed on an inner surface thereof with chain bosses CB protruding so as to correspond to the chain pockets CP of the unit chain 10 to which the chain bosses are to be linked.

In addition, each of the chain pockets CP includes a save rim SR spaced apart from a pinhole 101a of the barrel 101 and formed in a predetermined region along a circumference of the pinhole 101a, an opening CPO which acts as a passage through which the chain boss CB is inserted into the chain pocket CP to be placed therein, a guide CPG having a plane guiding movement of the chain boss CB inserted into the chain pocket CP through the opening CPO from one side of an inlet of the opening CPO to an inner surface of one side of the save rim SR.

Here, the guide CPG according to this embodiment constitutes the chain pocket CP together with the save rim SR and the opening CPO, in which the guide surface of the guide CPG and the inner surface of the save rim SR are configured to have a gradient. Accordingly, an inner surface of the chain pocket CP generally has a diameter gradually increasing from outside of the pocket to inside of the pocket in a depth direction of the pocket.

In other words, the inner surface of the save rim SR and the guide surface of the guide CPG constituting the chain pocket CP form a gradient in the depth direction of the chain pocket CP such that the chain pocket CP has a diameter increasing with depth into the chain pocket CP.

According to the second embodiment with this structure, the chain pocket CP is provided at one side thereof with the guide CPG including the guide surface having a gradient for efficient assembly of the chain boss CB of the yoke 102, which is inserted through the opening CPO corresponding to a region in which the chain pocket CP is not formed.

On the other hand, the inner surface of the save rim SR and the inner surface of the guide CPG have a gradient such that the chain pocket CP has a gradually increasing area towards a bottom surface of the chain pocket CP, and an outer surface of the chain boss CB has a gradient corresponding thereto.

In the structure of this embodiment, the matching surface of the chain boss CB or the chain pocket CP has a gradient, thereby preventing the yoke from spreading.

That is, the gradient formed in the chain boss CB and the chain pocket CP constitutes a hook CPH, thereby more effectively preventing an existing phenomenon that the chain pin 11 is bent to allow the yoke to spread when the chain is subjected to tensile load.

More specifically, in the related art, when the chain pin 11 tends to bend due to tensile load exerted by a typical conveyor chain, the yoke 102 can be easily spread in the axial direction of the chain pin 11. However, according to this embodiment, each of the chain boss CB and the chain pocket CP has the gradient to form the hook CPH and acts to prevent the yoke 102 from spreading due to interference with axial movement of the chain pin 11.

Accordingly, even when the conveyor chain is subj ected to tensile load which forces the chain pin 11 to bend, the yoke 102 can be effectively prevented from spreading apart, thereby further preventing fracture of the chain.

### [Embodiment 3]

Next, with reference to FIG. 9 to FIG. 12, a third embodiment of the present invention will be described.

FIG. 9 is an exploded perspective view of a link structure of a conveyor chain according to a third embodiment of the present invention, FIG. 10 is a cross-sectional view of the link structure of the conveyor chain according to the third embodiment of the present invention shown in FIG. 9, FIG. 11 is a plan view of a barrel shown in FIG. 9, and FIG. 12 is a view illustrating a guide slope range in a chain boss of the barrel shown in FIG. 9.

Referring now to FIG. 9 to FIG. 12, a conveyor chain for a sludge collector according to the third embodiment includes a plurality of unit chains 10 and chain pins 11 each mediating linkage between the unit chains 10.

The unit chain 10 is provided at one side thereof with barrels 101 and at the other side thereof with yokes 102, in which each of the barrels 101 of the unit chain 10 is formed on an outer surface thereof with chain bosses CB' and each of the yokes 102 of the unit chain 10 is formed on an inner surface thereof with chain pockets CP' recessed so as to correspond to the chain bosses CB' of the unit chain 10 to which the chain pockets are to be linked.

In addition, a maximum width between the chain bosses CB' formed at opposite sides on the outer surface of the barrel 101 is greater than an inner width of the yoke 102 (that is, a distance between opposite inner surfaces of the yoke) into which the barrel 101 is inserted.

In addition, a front region CB'-F of the chain boss CB' in an insertion direction of the barrel 101 is gradually lowered in a forward direction so as to facilitate insertion of the barrel 101 into the yoke 102 upon assembly of the barrel 101 and the yoke 102.

In the following, advantageous effects of the third embodiment with this structure will be described.

In the conveyor chain according to this embodiment, the maximum width between the chain bosses CB' formed at the opposite sides on the outer surface of the barrel 101 is greater than the inner width of the yoke 102 into which the barrel 101 is inserted. Here, since the front region CB'-F of the chain boss CB' in the insertion direction of the barrel 101 is gradually lowered toward a front end thereof, the barrel 101 can be easily inserted into the yoke 102 when the barrel 101 and the yoke 102 are assembled.

That is, since a front side of the front region CB'-F is low, the barrel 101 can be easily inserted into the yoke 102 at the beginning of assembly and, since the maximum width between the chain bosses CB' at the opposite sides on the outer surface of the barrel 101 is greater than the inner width of the yoke 102 into which the barrel 101 is inserted, the chain bosses CB' of the barrel 101 interfere with the yoke 102 during insertion of the barrel 101.

Here, the yoke 102, which has an elastically deformable structure, is spread to both sides by interference with the chain bosses CB' of the barrel 101, and when the chain bosses CB' of the barrel 101 reach a place at which the chain bosses CB' of the barrel 101 engage with the chain pockets CP' of the yoke 102, the yoke 102 is forced inwardly by elastic resilience, whereby the chain bosses CB' of the barrel 101 are inserted exactly into the chain pockets CP' of the yoke 102.

In the third embodiment with this structure, it is not necessary to form a separate opening (CPO) or guide (CPG), as provided in the first or second embodiment.

In the conveyor chain according to this embodiment, when assembled, the chain bosses CB' of the barrel 101 are inserted into the chain pockets CP' of the yoke 102 by resilience of the yoke 102 and an inner wall of each chain pocket CP' is caught by a protrusion formed at a rear end of the chain boss CB' when tensile load is applied to the conveyor chain.

Furthermore, shear stress is also applied to the chain boss CB' of the barrel 101 due to such a catching phenomenon and thus tensile load that the conveyor chain according to this embodiment can bear is increased compared to a typical chain, thereby improving durability and lifespan of the conveyor chain.

### [Embodiment 4]

Hereinafter, a fourth embodiment of the present invention will be described with reference to FIG. 13.

In the first to third embodiments described above, it can be seen that fracture strength of the chain is increased by the chain boss CB or CB' engaging with the inner wall of the chain pocket CP or CP'. In addition, the fourth embodiment of the present invention modifies the structure of the barrel of the unit chain 10 from a typical integral type to a separable type, and the structure according to the fourth embodiment is applicable to the structures of the unit chains according to the first to third embodiments described above.

More specifically, according to the fourth embodiment, the barrel 101, which is an element constituting a unit chain, is characterized in that a connecting portion connecting left and right sides of the barrel is configured in the form of a separable roller.

With this structure, the fourth embodiment of the present invention has the following effects.

According to this embodiment, in the unit chain 10, a connecting portion integrally connecting left and right sides of the barrel 101 has a separable roller structure such that the separated roller-shaped connecting portion 1011 can be assembled to and supported on supports 1012, which protrude from left and right inner surfaces of the barrel, when the chain is assembled.

Accordingly, when the unit chain 10 according to this embodiment is applied to a sedimentation basin, since the roller-shaped connecting portion 1011 is a separable structure in engagement of the chain and the sprocket, the roller-shaped connecting portion 1011 can roll in place in the event of interference with the sprocket and an engagement position of the connecting portion 1011 with respect to the sprocket can be changed by such rolling action of the connecting portion 1011.

Such a change of the engagement position by rolling of the connecting portion 1011 can prevent side wear of the connecting portion 1011 in engagement of the barrel 101 with the sprocket, thereby reducing load on the chain.

Next, referring to FIG. 14 and FIG. 15, another embodiment of a chain pin applicable to the present invention will be described.

FIG. 14 is a perspective view of a chain pin made of steel reinforced plastic (SRP) as another embodiment of the chain pin according to the present invention and FIG. 15 is an exploded perspective view of FIG. 14.

Referring to these drawings, in each of the first through fourth embodiments described above, the chain pin may be made of high-strength steel reinforced plastic (SRP).

That is, a chain pin 11' (hereinafter referred to as "SRP chain pin"), to which high-strength steel reinforced plastic (SRP) technology is applied, refers to a chain pin in which a shaft portion of the chain pin is inserted into a stainless steel pipe, and is applied to the connecting portion in order to allow the unit chains 10 to be regularly connected to each other to form a line.

In the detailed configuration of the SRP chain pin 11' according to the present invention, the SRP chain pin 11' includes a plastic pin unit 170 formed of a plastic material and a steel sleeve 180 made of stainless steel and coupled to the plastic pin unit 170.

The plastic pin unit 170 may be formed of, for example, an engineering plastic material. Such a plastic pin unit 170 includes a shaft portion 171, a jaw portion 172 coupled to one end of the shaft portion 171, and a flange 173 formed at the other end of the shaft portion 171 and having a larger cross-sectional area than the shaft portion 171.

The shaft portion 171 may be formed with a plurality of through-holes (not shown). Since the plastic pin unit 170 is also formed of a plastic material which weighs significantly less than metal, the plurality of through-holes formed in the shaft portion 171 further reduces the overall weight of the plastic pin unit 170.

Although the plastic pin unit 170 can have less strength and wear resistance than a pin unit, the entire shaft portion of which is made of steel, such a disadvantage of the plastic pin unit 170 can be compensated for by the steel sleeve 180 made of stainless steel.

The jaw portion 172 constitutes one end of the shaft portion 171. After the stainless steel sleeve 180 is press-fitted into the shaft portion 171, the jaw portion 172 may be coupled to one end of the shaft portion 171. However, it should be understood that such a coupling method does not limit the scope of the present invention.

This is because the SRP chain pin 11' can be molded in other ways. For example, the shaft portion 171 may be integrally formed with the steel sleeve 180 through insert-injection molding, with the steel sleeve 180 inserted into a mold, thereby eliminating a separate assembly process of press-fitting the steel sleeve 180 into the shaft portion 171. Alternatively, the jaw portion 172 may be injection molded onto one end of the shaft portion 171 simultaneously with injection molding of the shaft portion 171.

The jaw portion 172 may include a jaw pocket 172a and a plurality of jaw wings 172b slantedly protruding from a circumferential surface of the jaw pocket 172a. The plurality of jaw wings 172b may be caught by peripheral edges at one side of pinholes formed in the unit chain 10, whereby the SRP chain pin 11' can be assembled to the unit chain.

In addition, a fix pin 172c may be disposed at a central point of the plurality of jaw wings 172b.

Furthermore, the flange 173 constitutes the other end of the shaft portion 171. Since the flange 173 has a larger cross-sectional area than the shaft portion 171, the flange 173 serves to prevent the plastic pin unit 170 from falling out of the pinholes formed in the unit chain 10.

On the other hand, the steel sleeve 180 is integrally formed with the shaft portion 171 of the plastic pin unit 170 through injection molding. In this embodiment, the steel sleeve 180 is applied to an insert-injection type steel sleeve-integrated chain pin 11 through insert-injection molding in a mold, in which the steel sleeve 180 is integrally molded to an outer wall of the shaft portion 171.

Here, a plurality of assembly holes 181 is formed in an externally prefabricated steel sleeve 180 and assembly protrusions 174 are formed on the outer wall of the shaft portion 171 to be coupled to the assembly holes 181. Therefore, the insert-injection type SRP chain pin 11' prevents idling of the pin unit 170 and the steel sleeve 180.

Such an insert-injection type SRP chain pin 11' serves to prevent delamination by repeated buckling loads applied to the non-metallic conveyor chain according to this embodiment. Of course, the externally prefabricated steel sleeve 180 may also be integrally press-fitted into the shaft 171 of the plastic pin unit 170.

By applying the SRP chain pin 11' with this configuration to improve durability as compared to typical chain pins, durability and strength of the chain link structure can be substantially improved, thereby reducing maintenance costs and operation costs while suppressing microplastic elution by protecting the inner shaft portion from abrasion by sand and sludge due to the stainless steel pipe

Furthermore, according to the present invention, when the link structure of the conveyor chain according to any of Embodiments 1 to 4 is applied together with the SRP chain pin 11', shear load that could be borne solely by the chain pin due to tensile load on the chain in a sedimentation basin can be received by the barrel 101 and the yoke 102 of the chain surrounding the SRP chain pin together with the highly reinforced SRP chain pin 11', whereby the non-metallic conveyor chain can have improved durability through increase in shear resistance thereof, thereby ultimately improving economic feasibility of a sludge removal facility through reduction in maintenance costs of the sludge removal facility and increase in lifespan thereof.

### [Industrial Applicability]

The present invention can improve durability of a non-metallic conveyor chain applied to a sedimentation basin of a sewage or wastewater treatment system of a sludge removal facility by increasing shear strength of the non-metallic conveyor chain through improvement of a chain link structure of the non-metallic conveyor chain, thereby improving operation efficiency by preventing a phenomenon causing interference with operation of the sewage or wastewater treatment system due to fracture of the conveyor chain, and is applicable not only to water treatment and polluted water purification facilities, but also to various facilities requiring conveyor chains. Accordingly, the present invention has high industrial applicability.

## Claims

1. A non-metallic conveyor chain with improved durability for a sludge collector, the non-metallic conveyor chain comprising: a plurality of unit chains; and chain pins by which the unit chains are linked to each other,
wherein each of the unit chains is provided at one side thereof with a barrel and at the other side thereof with a yoke,
the barrel of the unit chain is formed on an outer surface thereof with a chain pocket having a groove structure, and
the yoke of the unit chain is formed on an inner surface thereof with a chain boss protruding so as to correspond to the chain pocket of the unit chain to which the chain boss is to be linked.

2. The non-metallic conveyor chain according to claim 1, wherein the chain pocket comprises:
a save rim spaced apart from a pinhole of the barrel and formed in a predetermined region along a circumference of the pinhole; and
an opening acting as a passage through which the chain boss is inserted into the chain pocket to be placed therein.

3. The non-metallic conveyor chain according to claim 2, wherein an inlet width of the opening is greater than or equal to an outer diameter of the chain boss.

4. The non-metallic conveyor chain according to claim 2, wherein the chain pocket further comprises:
a guide having a plane guiding movement of the chain boss inserted into the chain pocket through the opening from one side of an inlet of the opening to an inner surface of one side of the save rim, the guide constituting the chain pocket together with the save rim.

5. The non-metallic conveyor chain according to claim 3, wherein an inner surface of the chain pocket has a gradient in a depth direction of the chain pocket such that the chain pocket has a diameter increasing with depth into the chain pocket.

6. A non-metallic conveyor chain with improved durability for a sludge collector, the non-metallic conveyor chain comprising a plurality of unit chains and chain pins by which the unit chains are linked to each other,
wherein each of the unit chains is provided at one side thereof with a barrel and at the other side thereof with a yoke,
the barrel of the unit chain is formed on an outer surface thereof with a chain boss, and
the yoke of the unit chain is formed on an inner surface thereof with a chain pocket recessed so as to correspond to the chain boss of the unit chain to which the chain pocket is to be linked.

7. The non-metallic conveyor chain according to claim 6, wherein a maximum width between chain bosses formed at opposite sides on the outer surface of the barrel is greater than an inner width of the yoke into which the barrel is inserted.

8. The non-metallic conveyor chain according to claim 7, wherein a front region of the chain boss in an insertion direction of the barrel is gradually lowered in a forward direction so as to facilitate insertion of the barrel into the yoke upon assembly of the barrel and the yoke.

9. The non-metallic conveyor chain according to any one of claims 1 to 8, wherein a connecting portion connecting right and left sides of the barrel has a separable roller structure.

10. The non-metallic conveyor chain according to any one of claims 1 to 8, wherein the chain pin comprises an SRP chain pin made of steel reinforced plastic (SRP).

11. A sludge removal facility comprising:
a sedimentation basin into which raw water is introduced; and
a sludge collector configured to scrape sludge from a bottom of the sedimentation basin and discharge the sludge from the sedimentation basin,
wherein the sludge collector is provided with the non-metallic conveyor chain according to any one of claims 1 to 8 to send scum pushed through operation of flights constituting the sludge collector from a water surface of the sedimentation basin to a trough for discharge.
